# EUROPEAN PATENT SPECIFICATION

(11) **EP 4 353 391 B1**
(45) Date of publication and mention of the grant of the patent: **29.10.2025**
(21) Application number: 23199345.2
(22) Date of filing: 25.09.2023
(51) Int. Cl.: B23K 9/173, B23K 9/32

(54) **WELDING TORCH WITH INTEGRATED WELDING FUME EXTRACTION SYSTEM AND DEVICE USING SAID TORCH**
SCHWEISSBRENNER MIT INTEGRIERTER SCHWEISSRAUCHABSAUGUNG UND GERÄT ZUR VERWENDUNG DIESES BRENNERS
TORCHE DE SOUDAGE AVEC SYSTÈME INTÉGRÉ D'EXTRACTION DES FUMÉES DE SOUDAGE ET DISPOSITIF UTILISANT CETTE TORCHE

(30) Priority: 07.10.2022 IT 202200020652
(43) Date of publication of application: 17.04.2024
(73) Proprietor: Trafimet Group S.p.A., 36020 Castegnero (VI) (IT)
(72) Inventor: DI GIOVANNI, Corrado, 36040 Torri di Quartesolo (VI) (IT)
(74) Representative: Ziliotto, Tiziano

(56) References cited:
- US-A- 4 016 398
- US-A1- 2016 256 951

## Description

### TECHNICAL FIELD OF THE INVENTION

The present invention is in the technical field of welding metallic materials.

In particular, the present invention refers to the realization of a welding torch with GMAW (Gas Metal Arc Welding) technology.

More in particular, the present invention refers to the realization of a welding torch provided with a welding fume extraction system.

The present invention also relates to a device using said torch.

### DESCRIPTION OF THE STATE OF THE ART

The use of welding technologies for joining materials, typically metallic materials, is known in various sectors, and in particular in the industrial sector.

Welding technologies of known type are grouped under the acronym GMAW (Gas Metal Arc Welding) also known as metal arc welding under gas shielding, commonly referred to as weld pool protection. In particular, MIG (Metal-Inert-Gas) welding or MAG (Metal-Active-Gas) welding can be identified, which differ substantially in the different gas that is used for the protection of the weld pool.

The known technologies involve the use of special equipment used by specialised operators who intervene on the material to be welded.

Said devices comprise, for this purpose, an element that can be handled by the operator, known as a torch, connected through a cable to a supply unit.

At the end of the torch there is a nozzle from which a welding material in the form of a wire and a quantity of shielding gas exit. Such devices of known type exploit the effect deriving from the generation of an electric arc between the torch and the piece to be welded which acts by melting the welding material with which the torch is fed. The molten welding material gives rise to the welding area, or weld pool, and the protection of the weld pool is ensured by an atmosphere that is defined by the shielding gas flowing from the nozzle of the torch itself.

The shielding gas is typically conveyed in the area to be welded through a system of pipes coming from a gas source, typically a cylinder, until it reaches the inside of the nozzle whose main purpose is precisely to direct the shielding gas towards the weld pool. At the same time, the welding material wire is advanced, by means of an appropriate advancement mechanism, through the torch passing in the torch body until it reaches the nozzle. In order to realize the electric arc, the electric current is brought to a suitable electrically conductor element, or electrode. The electrode is typically made of copper and is arranged coaxially inside the nozzle.

Torches of this type can be equipped with a suction system to evacuate the fumes deriving from the welding process.

A suction system of known type comprises a tubular suction element fixed between the torch body and the nozzle and provided with lateral suction mouths. The welding fumes are sucked laterally and upstream of the nozzle to be evacuated and/or treated.

Appropriate regulations/directives define guidelines in order to reduce/suppress the emission of such fumes and/or ensure safe working conditions for the operators.

It is also known that the welding torches are subjected to frequent maintenance operations aimed at re-establishing from time to time the ideal welding conditions, in particular by replacing the torch elements subjected to high wear, such as the electrode or the nozzle, generically referred to as consumable elements.

US2016256951A1 discloses a welding torch system for use in welding or cutting operations during which fume is created. The welding torch system has a welding torch comprising a contact tip holder and a coaxial nozzle comprising an inner shield gas conduit having a shield gas outlet for supplying a shield gas. The inner shield gas conduit surrounds the contact tip holder. An outer shell at least partly surrounds said inner shield gas conduit. The welding torch system further comprises a shield gas generator and supply unit for supplying shield gas through the shield gas outlet and a fume extracting assembly for extracting fume and ambient air.

US4016398A discloses a welding gun having vacuum fume extraction means wherein the level of vacuum exerted at the arc welding zone is regulated to avoid extracting shielding gas supplied to the welding zone. The vacuum level is regulated by admitting sufficient air to a fume extracting passage provided within the gun to reduce the vacuum to the desired level.

An aim of the present invention is to propose a welding torch alternative to the torches of known type.

A first aim of the present invention is to implement a welding torch that allows to improve the suction efficiency compared to the systems of known type and that at the same time guarantees the working conditions prescribed by the regulations in force.

Another aim of the present invention is to implement a welding torch that simplifies the maintenance and/or the replacement operations of the consumable elements, in particular of the nozzle and/or internal electrode, compared to the torches of known type.

### SUMMARY OF THE PRESENT INVENTION

In a first aspect thereof, the present invention therefore refers to a welding torch made according to claim 1.

The present invention therefore refers to a welding torch with integrated fume extraction system, said torch comprising a main body and a terminal area suited to be fed, through said main body, with a welding wire and a welding shielding gas, said terminal area being provided with at least one suction path for the fumes generated during welding, wherein said terminal area comprises:
- an electrode suited to be powered electrically and provided with an internal channel for the passage of said welding wire;
- a first conveyor element externally associated with said electrode and suited to allow said shielding gas to be conveyed externally to said electrode, said first conveyor element being provided with an outlet mouth suited to allow said welding wire to exit from said electrode;
- a second conveyor element suited to be associated with said main body and externally associated with said first conveyor element, wherein said at least one fume suction path is defined between said first conveyor element and said second conveyor element;
- disconnection means suited to cause the disconnection of said first conveyor element when said second conveyor element is disconnected from said main body.

In accordance with the invention, the disconnection means comprise a first disconnection element cooperating with the first conveyor element and protruding externally from the first conveyor element towards the second conveyor element and a second disconnection element cooperating with the second conveyor element and protruding internally from the second conveyor element towards the first conveyor element, said first disconnection element and said second disconnection element being suited to interact in such a way as to move and disconnect the first conveyor element when the second conveyor element is disconnected from the main body.

Preferably, the first disconnection element comprises an element which is externally associated with the first conveyor element or the first disconnection element comprises an element made in a single piece with the first conveyor element.

According to a preferred embodiment, the second disconnection element comprises an element internally associated with the second conveyor element or the second disconnection element comprises an element made in a single piece with the second conveyor element.

In a preferred embodiment, the second conveyor element interacts with the first conveyor element to maintain the first conveyor element in the operating condition when the second conveyor element is connected to the main body.

Preferably, the second conveyor element interacts with the first conveyor element through interconnection means.

According to a preferred embodiment, the interconnection means comprise an element with circular course which is suited to be compressed so that it interacts with the first conveyor element when the second conveyor element is connected to the main body.

**In** a preferred embodiment, the interconnection means comprise a shaped filiform spring.

Preferably, the torch comprises fixing means suited to maintain the first conveyor element in the operating condition.

According to a preferred embodiment, the fixing means comprise at least one elastically yielding portion of the first conveyor element, the elastically yielding portion being suited to allow the first conveyor element to deform radially inwards, and a clamping element cooperating with the external surface of the first conveyor element in order to ensure that the first conveyor element deforms radially inwards.

In a preferred embodiment, said at least one elastically yielding portion is obtained by means of one or more slits made in the first conveyor element.

Preferably, the fixing means suited to maintain the first conveyor element in the operating condition comprise screwing means.

According to a preferred embodiment, the second conveyor element is connected to the main body by means of a screwing operation or by means of a bayonet connection system.

In a second aspect thereof, the present invention refers to a welding device comprising a supply unit, a torch and a connection cable between said supply unit and said torch, wherein the torch is made according to what is described above.

In a preferred embodiment, the welding device comprises a power supply unit and/or a shielding gas supply unit and/or a wire advancement and supply unit and/or a fume extraction unit and/or a cooling fluid supply unit.

### BRIEF DESCRIPTION OF THE DRAWINGS

Further advantages, objects and features as well as embodiments of the present invention are defined in the claims and will be clarified hereinafter by means of the following description, in which reference is made to the accompanying drawing tables. In particular:
- Figure 1 represents an axonometric view of a torch in a welding device according to a preferred embodiment of the invention;
- Figure 2 represents an exploded view of the torch of Figure 1;
- Figure 3 represents a longitudinal sectional view of the end part of the torch of Figure 1;
- Figure 4 shows an enlarged detail of Figure 3;
- Figure 5 represents the sectional view of the torch along the line V°-V° indicated in Figure 3;
- Figures 6 and 7 represent two successive steps of assembly of the torch of Figure 1;
- Figure 8 represents an embodiment variant of Figure 2;
- Figure 9 represents the longitudinal sectional view of the end part of the torch of Figure 8 in assembled configuration;
- Figure 10 shows an enlarged detail of Figure 9;
- Figure 11 represents an embodiment variant of Figure 10;
- Figure 12 represents another embodiment variant of Figure 2;
- Figure 13 shows an element of Figure 12 according to another point of view;
- Figure 14 represents the longitudinal sectional view of the end part of the torch of Figure 12 in assembled configuration;
- Figure 15 shows an enlarged detail of Figure 14;
- Figure 16 represents the sectional view of the torch along the line XVI°-XVI° indicated in Figure 13.

### DETAILED DESCRIPTION OF PREFERRED EMBODIMENTS OF THE PRESENT INVENTION

Although the present invention is described below with reference to embodiments thereof represented in the drawing tables, the present invention is not limited to the embodiments described below and represented in the drawing tables. On the contrary, the embodiments described below and represented in the drawing tables clarify certain aspects of the present invention, the scope of which is defined by the claims.

The present invention has proved particularly advantageous with reference to the realization of welding torches that use a MIG technology. It should however be pointed out that the present invention is not limited to the realization of welding torches of this type. On the contrary, the present invention finds convenient application in all cases that envisage the use of torches for metal arc welding under protection of shielding gas. By way of example, the present invention may be extended to the welding technology with MAG technology.

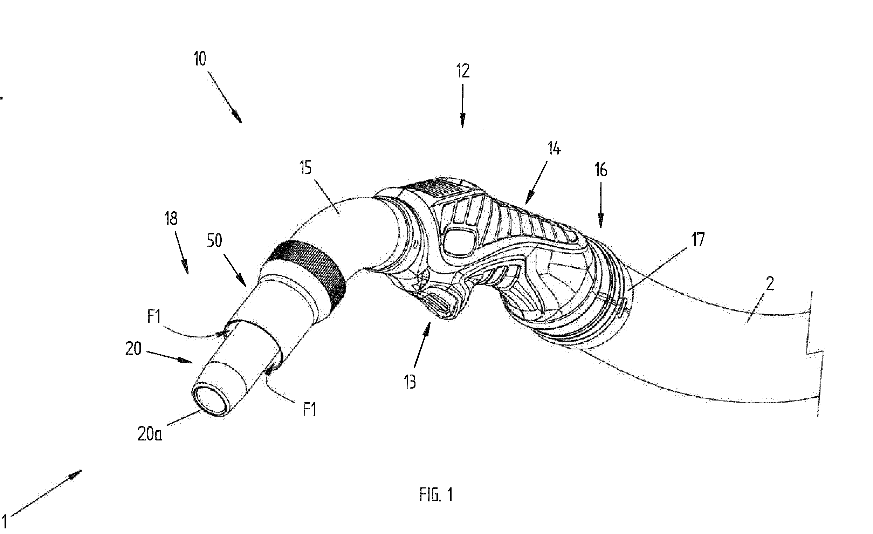

With reference to Figure 1 there is shown a torch according to a preferred embodiment of the invention, indicated overall with 10, usable in a welding device 1 using a MIG technology.

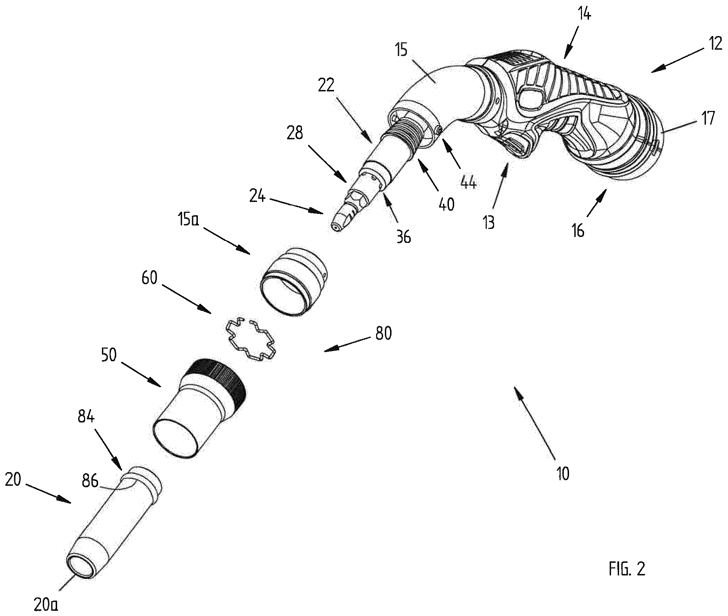

The welding device preferably comprises said welding torch 10, a supply unit (not illustrated) and a cable 2 for connecting the torch 10 to the supply unit. The latter preferably comprises an arc current generator group, or power supply unit, a shielding gas supply unit, a wire advancement and supply unit and a suction unit. The supply unit may further comprise a cooling fluid supply unit. The welding torch 10 according to the first preferred embodiment described with reference to Figures 1 to 7 refers to a torch provided with an air cooling system, the component parts of which are not described in detail as they are of known type and not the subject of the present invention.

For some alternative embodiments, not described, the torch may be provided with a water cooling system.

The power supply unit is responsible for generating the current necessary to generate and maintain the electric arc at the end of the welding torch 10.

The shielding gas employed in the MIG technology preferably comprises argon (Ar) or helium (He) or mixtures of Ar and CO2. The shielding gas supply unit comprises, for example, a pressurized gas cylinder.

The torch 10 can be used in a known manner and handled directly by an operator who grasps it or, in alternative preferred solutions, used in automated stations.

The torch 10 preferably comprises a main body 12, preferably graspable by an operator, having an initial portion 16 provided with a connection bushing 17 towards the connection cable 2 and a terminal area 18 where the welding takes place.

The main body 12 preferably identifies a first area 14 suitably configured to be grasped by the operator and a protruding tube 15 extending towards the terminal area 18.

For the above reasons, the supply unit (not shown) feeds the torch 10 with the shielding gas and the welding wire.

The torch 10 has the task of conveying the shielding gas and the welding wire in its terminal area 18 which will be suitably arranged at the area to be welded to make the weld pool.

A button 13 is preferably associated with the main body 12 and operable by the operator to start welding.

In the terminal area 18 a first conveyor element 20, or nozzle, with its outlet mouth 20a has the task of directing the shielding gas towards the weld pool.

The nozzle 20 preferably has a shape suited to convey the shielding gas in the appropriate direction.

In the illustrated preferred embodiment, the nozzle 20 comprises its slightly conical end portion. In embodiment variants, however, the end portion could have different shapes, for example cylindrical shape.

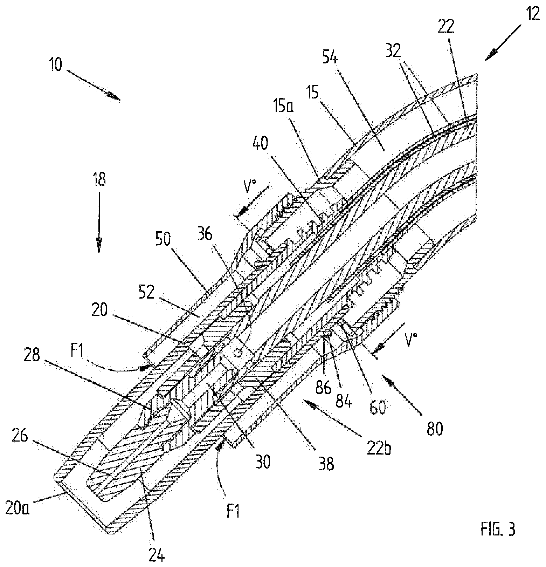

As shown in Figure 3, the torch 10 comprises, first of all, a current-carrying element 22 of preferably tubular shape and made of electrically conductive material, preferably of copper.

The current-carrying element 22 preferably comprises a first end, not illustrated, suited to be connected to the power supply unit through the connection cable 2 and a second end 22b suited to be electrically and mechanically connected to an electrode 24 arranged inside the nozzle 20.

The electrode 24 comprises a central channel 26 for receiving the welding wire (not shown) and is preferably connected to the second end 22b of the current-carrying element 22 through an electrode-carrying element 28. The electrode-carrying element 28 is connected to the second end 22b of the current-carrying element 22 preferably by means of a screwing operation (as shown in Figure 3). These connection means allow the screwing/unscrewing operation and therefore the easy removability of the electrode-carrying element 28. In embodiment variants, these connection means may be different, for example, a connection by mechanical interference, or a snap connection (bayonet), or by means of chamfering or by means of welding may be provided. In turn, the electrode 24 is connected to the electrode-carrying element 28 preferably by means of a screwing operation. These connection means allow the screwing/unscrewing operation and therefore the easy removability of the electrode 24. In embodiment variants, these connection means may be different, for example providing for a removable connection by mechanical interference or a snap connection (bayonet). The electrode-carrying element 28 has the central area 30 that is hollow and preferably funnel-shaped to facilitate the introduction of the welding wire into the central channel 26 of the electrode 24.

The electrode 24 and the electrode-carrier 28 are made of electrically conductive material, preferably of copper, to allow the passage of the electric current coming from the current-carrying element 22 towards the welding wire. The wire inside the channel 26 of the electrode 24 is in fact in contact with the electrode 24 itself. The welding wire is advanced first into the current-carrying element 22, then into the central area 30 of the electrode-carrier 28 and then into the channel 26 of the electrode 24.

The electrode-carrier 28 is preferably made of copper or brass and serves to avoid screwing the electrode 24 directly onto the current-carrying element 22 and favour the assembly/disassembly and/or replacement of the electrode 24. The electrode 24, in fact, is the part directly in contact with the wire during welding and is subject to wear and overheating and is therefore an element that requires periodic replacements.

In embodiment variants, however, the electrode could be connected directly to the current-carrying element.

Returning to the description of the main body 12, two elements 32, preferably tubular in shape, are preferably externally associated with the current-carrying element 22. The internal element is preferably electrically insulating and preferably made of Teflon^{®} and the external element is preferably made of brass. The current-carrying element 22 in proximity to the electrode-carrier 28 comprises a plurality of through holes 36 which define corresponding gas conveying channels from the inside of the current-carrying element 22 to the outside. In particular, the shielding gas arriving at the torch 10 in the central portion of the current-carrying element 22 is conveyed through the holes 36 towards the outlet mouth 20a of the nozzle 20.

In the illustrated embodiment, the holes 36 have a substantially circular sectional shape. In different embodiment variants, however, these holes may take shapes and courses that are different from what is illustrated and described herein or other different or alternative gas conveying paths may be identified.

As described above, the electrode-carrying element 28 is connected at the second end 22b of the current-carrying element 22.

Preferably, an insulating bushing 38 is mounted externally to the current-carrying element 22. The bushing 38 acts as a centring element between the current-carrying element 22 and the nozzle 20 and allows maintaining the correct coaxiality between the two elements 22 and 20. The bushing 38 also acts as an electrical isolation element between the current-carrying element 22 and the nozzle 20.

The bushing 38 is preferably made of rigid material with mechanical, thermal and insulating characteristics suited to withstand the stresses imposed during welding.

A sealing element 40 is also preferably interposed between the bushing 38, the nozzle 20 and the tubular elements 32. The nozzle 20 is mounted for at least a portion thereof externally to the sealing element 40.

The sealing element 40 is preferably made of rigid material with mechanical, thermal and insulating characteristics suited to withstand the stresses imposed during welding, preferably of brass.

The torch 10 according to the present invention is further equipped with an integrated fume extraction system. The terminal area 18 is for the purpose advantageously provided with at least one suction path F1 for the fumes generated during welding.

According to one aspect of the present invention, the torch 10 comprises a second conveyor element 50, or collector, associable to the main body 12, in particular to the protruding tube 15 of the main body 12.

According to the preferred embodiment illustrated in the figure, the collector 50 is connectable to the main body 12 and preferably connectable to the protruding tube 15 of the main body 12 by means of a bushing 15a.

The collector 50 is preferably connectable to the bushing 15a by means of a screwing operation. The bushing 15a is preferably connectable to the main body 12 by mechanical interference or with play and the aid of blocking screws 44, like in the present embodiment.

In different embodiment variants, however, the collector could be connectable directly to the protruding tube 15 or with a bayonet connection system.

The collector 50 is externally associated with the nozzle 20 and the first part 52 of said fume suction path F1 is advantageously defined between the nozzle 20 and the collector 50, in particular defined by the annular cavity 52 defined between the nozzle 20 and the collector 50.

The entry of the fumes in the corresponding fume suction path F1 is advantageously directed directly towards the welding area. This allows to maintain a high suction efficiency of the fumes that are sucked substantially immediately after their generation.

The distance between the suction path/mouth F1 and the welding area is also advantageously minimized. This allows the welding device 1 to be equipped with a suction unit with reduced power compared to the devices of known type where the suction mouths are further away from the welding area and require higher powers to maintain the desired efficiency. This results in reduced production costs and consumptions compared to the systems of known type.

The fume suction path F1 then preferably extends towards the main body 12 of the torch 10 and is identified by an annular cavity 54 defined between the bushing 15a, the protruding tube 15 and the tubular elements 32. The fume suction path F1 finally extends towards the connection cable 2 to reach the suction unit.

According to one aspect of the present invention, the collector 50 interacts with the nozzle 20 to maintain the nozzle 20 in the operating condition when the collector 50 is connected to the main body 12 of the torch 10.

In the embodiment illustrated in Figures 1 to 5, the collector 50 interacts with the nozzle 20 preferably through interconnection means 60, as described in detail below.

The interconnection means 60 preferably comprise an interconnection element 60.

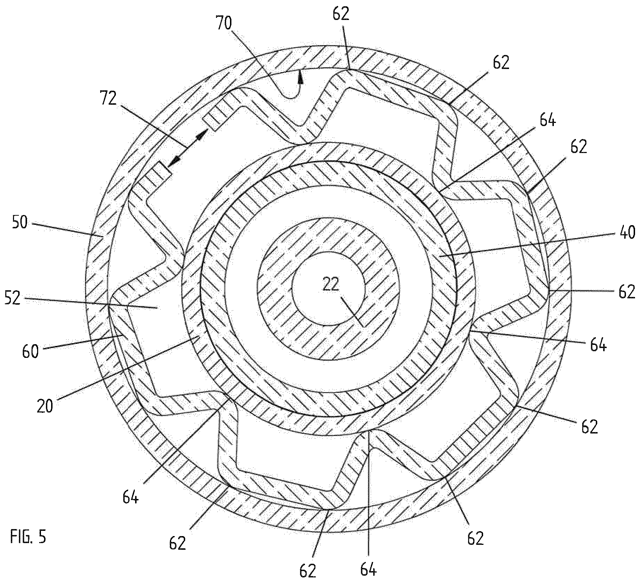

Preferably, the interconnection element 60 comprises a shaped spring 60 with circular course and shaped to be received in the annular area defined between the nozzle 20 and the collector 50, as better illustrated in Figure 5, where the shaped spring 60 is in the operational position of normal functioning of the torch 10. The spring 60 preferably comprises a plurality of radially external contact areas 62 suited to abut the internal surface of the collector 50 and a plurality of radially internal contact areas 64 suited to abut the external surface of the nozzle 20.

The spring 60 is preferably shaped to be radially compressed when the collector 50 is connected to the main body 12 of the torch 10 and, vice versa, the spring 60 may radially expand when the collector 50 is loosened and/or disconnected from the main body 12 of the torch 10.

The radial compression of the spring 60 when the collector 50 is connected to the main body 12 of the torch 10 allows to correctly maintain the nozzle 20 in the functioning position thanks to the frictional force generated by the external 62 and internal 64 contact areas of the spring 60.

Conversely, the radial expansion of the spring 60 when the collector 50 is disconnected from the main body 12 of the torch 10 reduces said frictional force and allows the movement and removal of the nozzle 20 from its functioning position.

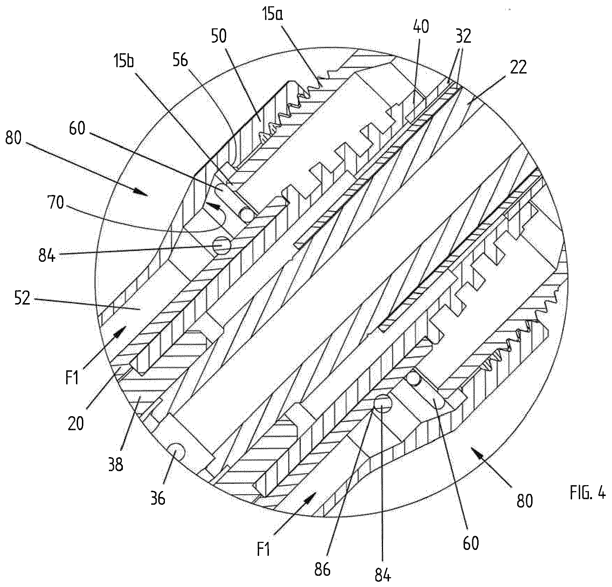

The radial compression action of the spring 60 when the collector 50 is connected to the main body 12 is preferably obtained thanks to the action of a compression area 70 (Figure 4) defined in the collector 50 and preferably comprising an internal inclined surface, more preferably a frustoconical surface, which in the step of connecting/screwing the collector 50 to the main body 12 radially compresses the spring 60.

With the collector 50 fixed in the operating condition, the spring 60 abuts the lower edge 15b of the bushing 15a, as indicated in Figure 4.

In the internal surface of the collector 50 there is also defined an abutment surface 56 suited to abut the spring 60 when the collector 50 is moved away from the main body 12, in particular through its unscrewing during the steps of removal thereof.

The radial compression of the spring 60 is guaranteed by an opening 72 made along the circular course of the spring 60 itself, as shown in Figure 5.

The spring is preferably made with a filiform element that is suitably shaped to confer said compressibility characteristic.

The adoption of a filiform spring 60 also allows the passage of the welding fumes that travel along the suction path F1. The filiform shape of the spring 60, in fact, does not prevent the passage of the fumes into the annular cavity 52 defined between the collector 50 and the nozzle 20, as visible in Figure 5.

According to one aspect of the present invention, the torch 10 comprises disconnection means 80 suited to cause the disconnection of the nozzle 20 when the collector 50 is disconnected from the main body 12 of the torch 10.

According to the preferred embodiment illustrated in Figures 1 to 7, the disconnection means 80 preferably comprise a first disconnection element 84 cooperating with the nozzle 20 and protruding externally from the nozzle 20 towards the collector 50 and a second disconnection element 60 cooperating with the collector 50 and protruding internally from the collector 50 towards the nozzle 20. The first disconnection element 84 and the second disconnection element 60 interact in such a way as to move and disconnect the nozzle 20 when the collector 50 is disconnected from the main body 12, as better described below.

According to the preferred embodiment illustrated in Figures 1 to 7, the second disconnection element 60 coincides with the spring 60.

The first disconnection element 84 preferably comprises an annular element 84 externally associated with the nozzle 20. The annular element 84 preferably consists of an elastic ring that is mounted in a corresponding annular seat 86 made circumferentially on the nozzle 20.

In an embodiment variant of the invention, the first disconnection element preferably comprises an annular protrusion made in a single piece externally on the nozzle.

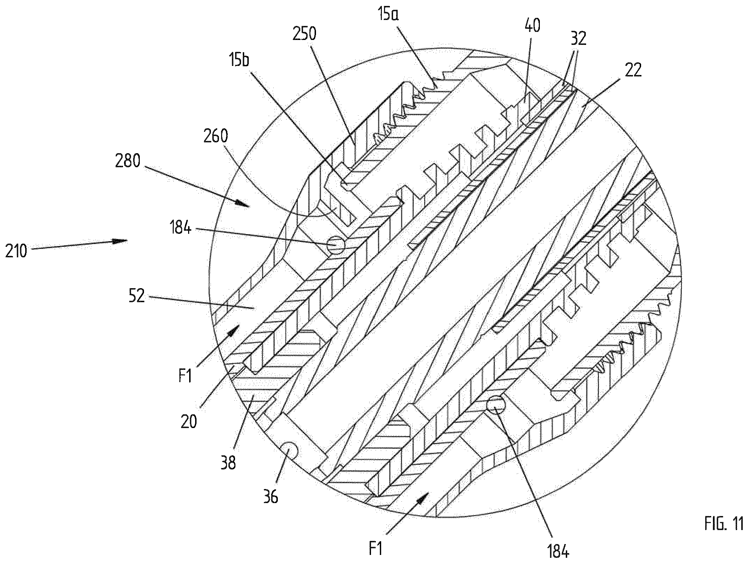

In further embodiment variants of the invention, the second disconnection element comprises a portion protruding internally from the collector, possibly made in a single piece with the collector as shown in the embodiment variant of Figure 11.

In the assembled configuration of the torch 10, as shown in Figures 3 and 4, the first disconnection element 84 and the second disconnection element (spring) 60 are configured in such a way that the first disconnection element 84 is arranged in the nozzle 20 at a position closer to the outlet mouth 20a of the nozzle 20 than the second disconnection element (spring) 60.

Still in the assembled configuration of the torch 10, the first disconnection element 84 and the second disconnection element (spring) 60 are placed at a predetermined distance.

When the collector 50 is disconnected from the main body 12, preferably following the unscrewing thereof from the main body 12, the second disconnection element (spring) 60 is pushed and moved outwards by the thrust effect of the abutment surface 56 of the collector 50.

At the same time, the radial expansion of the spring 60 is achieved with the reduction of the frictional force that allows the movement of the nozzle 20, as described above.

When the second disconnection element (spring) 60 then reaches the first disconnection element 84, it abuts the same causing it to be pushed away from the main body 12 together with the nozzle 20 (to which the first disconnection element 84 is associated).

By effect of the mutual interaction of the disconnection elements 84, 60, therefore, when the collector 50 is disconnected from the main body 12, the disconnection of the nozzle 20 occurs at the same time.

The removal of the collector 50 therefore causes the automatic removal of the nozzle 20, making it impossible for the torch 10 to function. This advantageously meets the safety regulations in force.

The aforesaid advantageous effect is therefore obtained thanks to the mutual position with which the disconnection elements 84, 60 are in the assembled position of the torch 10.

To ensure the correct mutual position of the disconnection elements 84, 60, the assembly of the torch 10 must take place according to a correct sequence.

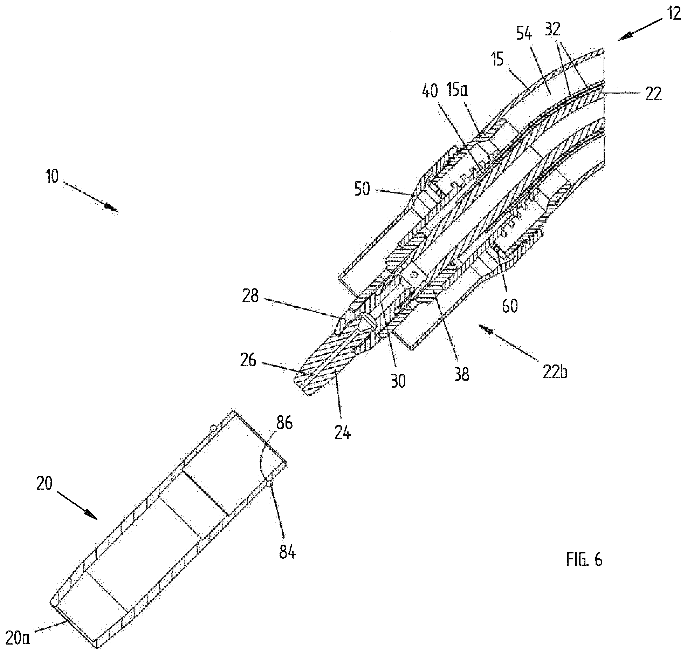

Firstly, as shown in Figure 6, the collector 50 is positioned in proximity to the main body 12, possibly by partially screwing it to the main body 12 itself.

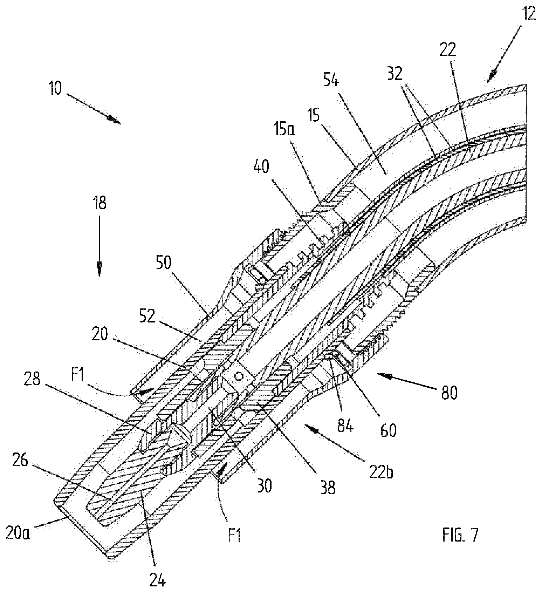

The nozzle 20 is then fully inserted in the functioning position (Figure 7). **In** this position, the radially internal contact areas 64 of the spring 60 are placed in abutment to the external surface of the nozzle 20.

The collector 50 and the nozzle 20 are then definitively fixed by screwing the collector 50 to the main body 12 with the consequent blocking effect of the spring 60 on the nozzle 20, according to what is described above.

It should also be highlighted that the proposed solution allows the removal of the collector 50 and of the nozzle 20 from the main body 12 of the torch 10 and the possible replacement of one or both of the elements. More in particular, the proposed solution allows the removal and the replacement of the nozzle 20 and/or of the electrode 24 which represent the elements subject to greater wear during the functioning of the torch 10.

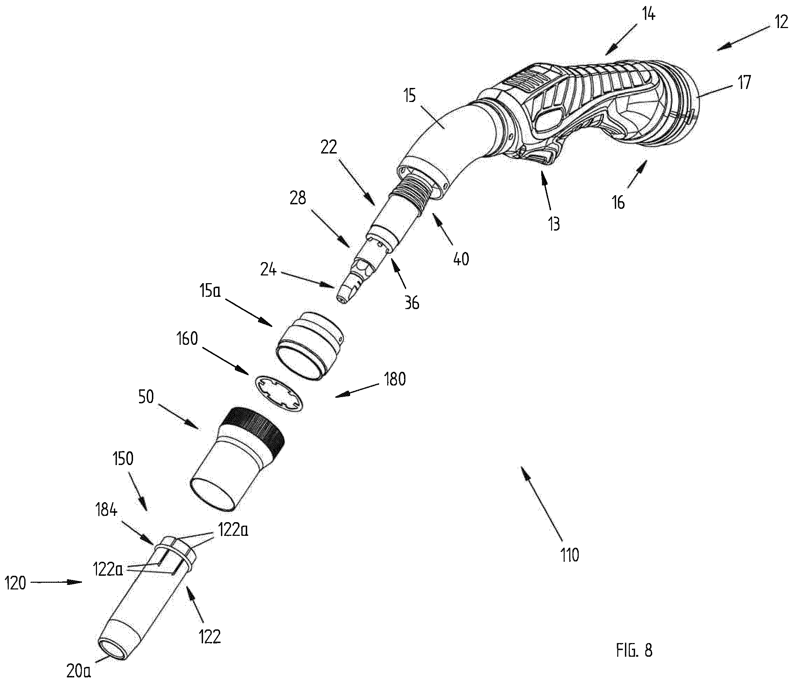

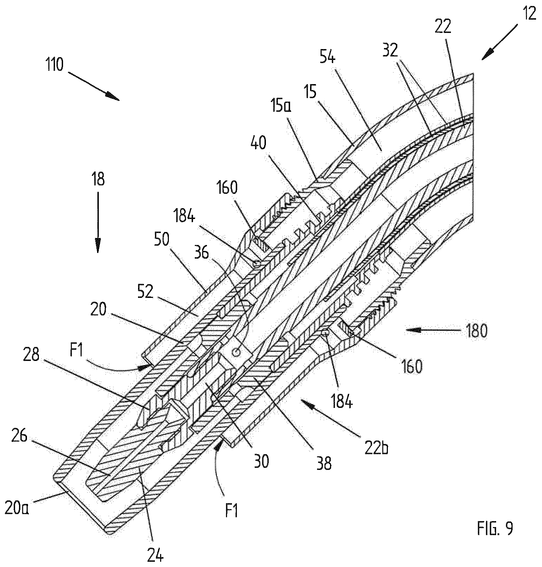

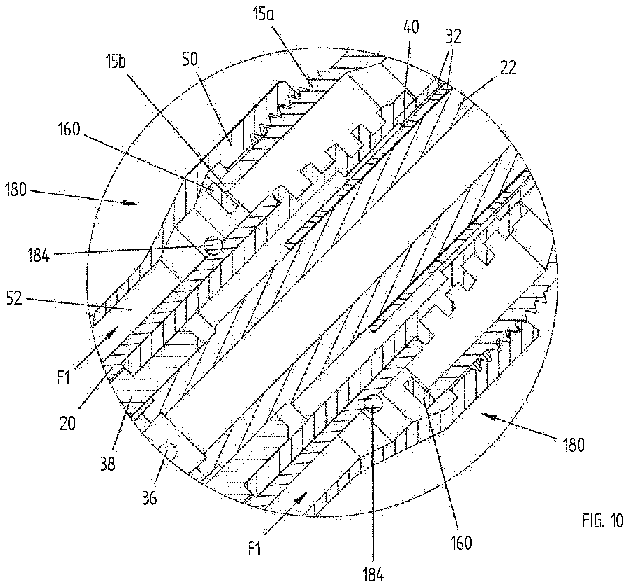

With reference to Figures 8 to 10, a torch 110 according to a preferred embodiment variant of the invention is shown. The component parts equivalent to the first preferred embodiment described with reference to Figures 1 to 7 are identified by the same reference numerals.

As described above, in the first embodiment the collector 50 interacts with the nozzle 20 to maintain the nozzle 20 in the operating condition when the collector 50 is connected to the main body 12 of the torch 10, in particular thanks to the radial compression action of the spring 60 and to the frictional force generated by the external 62 and internal 64 contact areas of the spring 60 on the external surface of the nozzle 20.

The embodiment variant shown in Figures 8 to 10 differs from the first embodiment in that it comprises fixing means 150, independent of the collector 50, which allow the nozzle 120 to be maintained in the operating condition.

The fixing means 150 are defined by a clamping elastic ring 184 suited to act on an elastically yielding portion 122 of the nozzle 120.

The elastically yielding portion 122 of the nozzle 120 is preferably obtained by means of one or more slits 122a made in the nozzle 120.

The fixing of the nozzle 120 is obtained by the radial thrust towards the centre of the clamping elastic ring 184 on the elastically yielding portion 122 of the nozzle 120 which blocks by mechanical interference the nozzle 120 to the sealing element 40.

The clamping elastic ring 184 preferably defines the first disconnection element 184 of the disconnection means 180 according to the invention.

According to this embodiment, moreover, the second disconnection element 160 preferably comprises a ring 160.

The function of this second disconnection element 160 will be to allow the disconnection of the nozzle 120 when the collector 50 is removed from the main body 12 of the torch 110, similarly to what described above, by means of its contact against the first disconnection element 184 at the time of the removal of the collector 50.

The second disconnection element 160, or ring, in this case does not exert any blocking function towards the nozzle 120, contrary to what happens for the spring 60 of the first embodiment.

In a preferred embodiment, however, the second disconnection element could take a filiform shape similar to the previously described spring 60, without however having any blocking function towards the nozzle 120.

With reference to Figure 11, a detail of a torch 210 according to a preferred embodiment variant of the invention is shown. The component parts equivalent to the embodiments described above are identified by the same reference numerals. In this figure, a possible embodiment variant of the disconnection means 280 is shown in which the second disconnection element 260 preferably consists of a portion 260 protruding internally from the collector 250 and made in a single piece with the collector 250 itself.

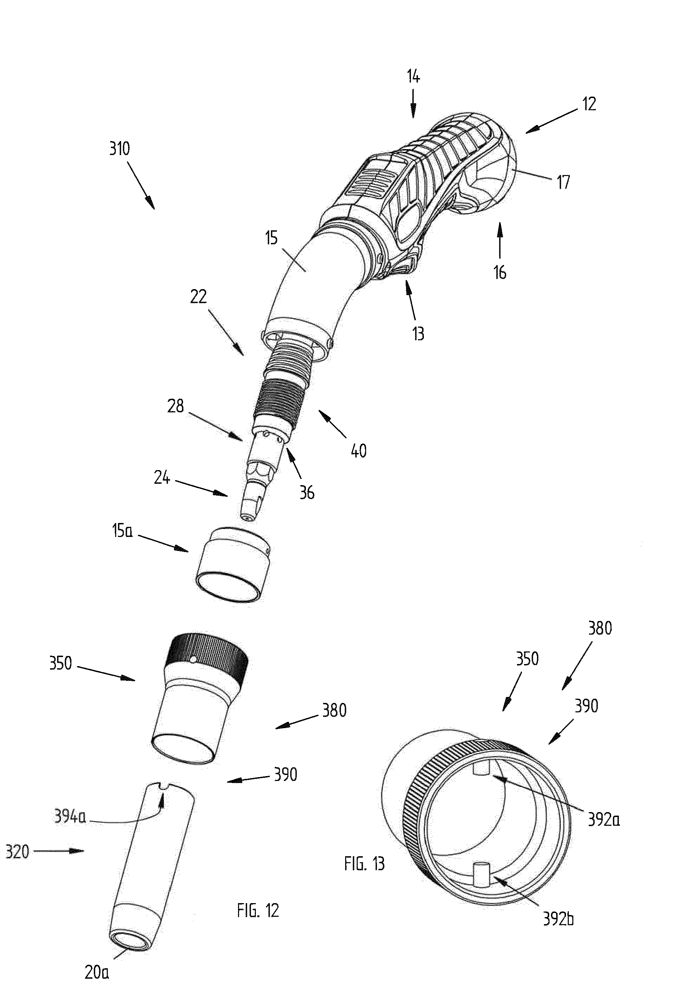

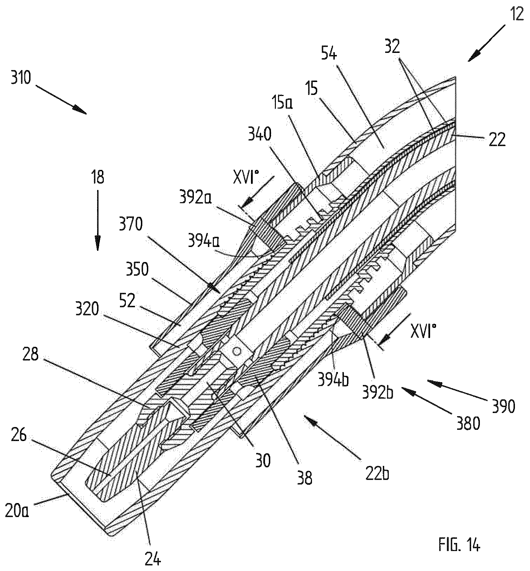

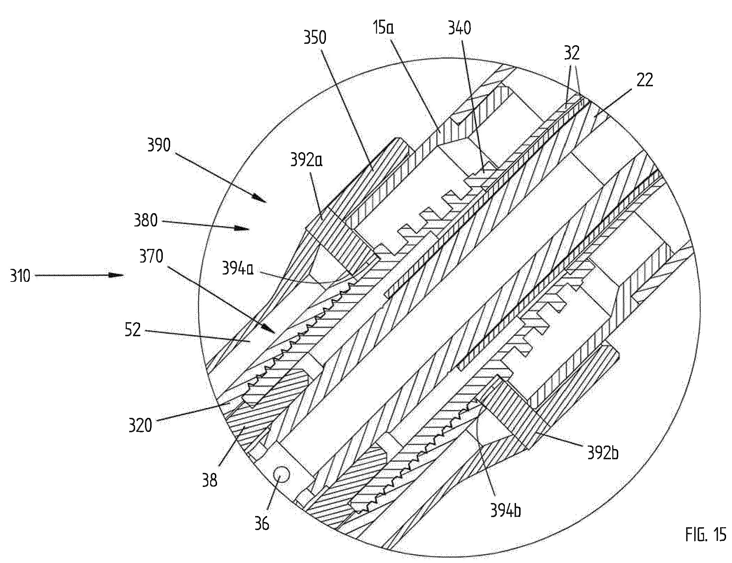

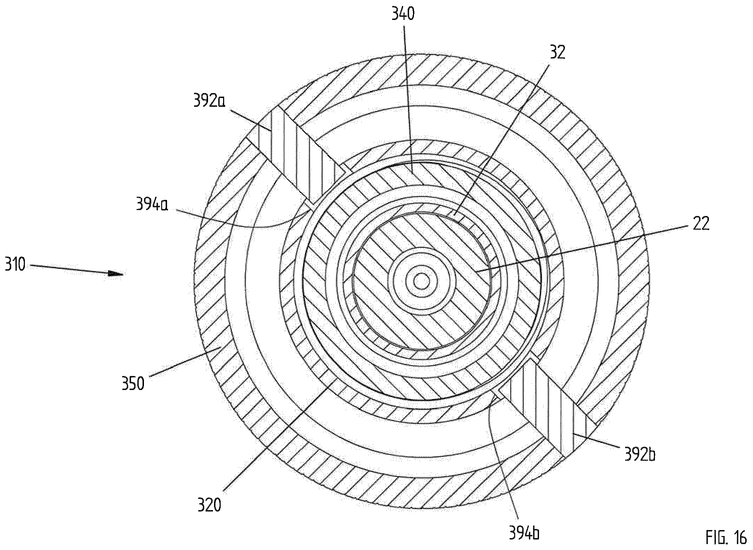

With reference to Figures 12 to 16, a torch 310 according to a preferred embodiment variant of the invention is shown. The component parts equivalent to the first preferred embodiment described with reference to Figures 1 to 7 are identified by the same reference numerals.

The embodiment variant shown in Figures 12 to 16 differs from the first embodiment in that it comprises fixing means 370, independent of the collector 350, which allow the nozzle 320 to be maintained in the operating condition.

The fixing means 370 are preferably defined by means for screwing the nozzle 320 to the sealing element 340. The nozzle 320 is therefore screwed for at least a portion thereof externally to the sealing element 340.

According to this embodiment, then, the collector 350 is externally associated with the main body 12, in particular with the protruding tube 15 of the main body 12, while it is preferably maintained in the operating condition by using means for the connection 390 to the nozzle 320.

In the preferred embodiment illustrated, the connection means 390 preferably comprise a pair of pins or plugs 392a, 392b, best visible in Figure 13, suitably fixed to the collector 350 by means of welding or gluing or interference or threading or equivalent means and which are inserted in respective seats 394a, 394b of the nozzle 320.

In an embodiment variant, not illustrated, the means for the connection of the collector to the nozzle could comprise one or more portions protruding internally from the collector and made in a single piece with the collector itself that are inserted in respective seats of the nozzle, de facto exerting the function carried out by said pins.

According to this embodiment, therefore, the nozzle 320 connected/screwed to the sealing element 340 maintains the collector 350 in the operating condition through said connection means 390.

For this embodiment, the disconnection means 380 suited to cause the disconnection of the nozzle 320 when the collector 350 is disconnected from the main body 12 of the torch 310 are constituted by said means for the connection 390 of the collector to the nozzle 320, preferably by said pins 392a, 392b.

In particular, by rotating the collector 350 counterclockwise in the case of righthand screwing means of the fixing means 370 or clockwise in the case of lefthand screwing means of the fixing means 370, the connection means 390 (the pins 392a, 392b) cause the rotation movement of the nozzle 320 and the simultaneous unscrewing 320 with respect to the sealing element 340 and with the consequent disconnection from the main body 12.

According to the advantageous aspect of the present invention, the removal of the collector 350 therefore causes the automatic removal of the nozzle 320, making it impossible for the torch 310 to function.

It has therefore been demonstrated by means of the present description that the torch according to the present invention allows to achieve the intended purposes.

In particular, the torch according to the present invention allows to meet the regulations in force in terms of safety and/or to improve the suction efficiency and/or to simplify the maintenance and/or replacement operations of the consumable elements.

Although the present invention has been elucidated above by means of the detailed description of its embodiments represented in the drawing tables, the present invention is not limited to the embodiments described above and represented in the drawing tables; on the contrary, further variants of the described embodiments fall within the scope of the present invention, which is defined by the claims.

## Claims

1. Welding torch (10; 110; 210; 310) with integrated fume extraction system, said torch (10; 110; 210; 310) comprising a main body (12) and a terminal area (18) suited to be fed, through said main body (12), with a welding wire and a welding shielding gas, said terminal area (18) being provided with at least one suction path (F1) for the fumes generated during welding, said terminal area (18) comprising:
- an electrode (24) suited to be powered electrically and provided with an internal channel (26) for the passage of said welding wire;
- a first conveyor element (20; 120; 220; 320) externally associated with said electrode (24) and suited to allow said shielding gas to be conveyed externally to said electrode (24), said first conveyor element (20; 120; 220; 320) being provided with an outlet mouth (20a) suited to allow said welding wire to exit from said electrode (24);
- a second conveyor element (50; 250; 350) suited to be associated with said main body (12) and externally associated with said first conveyor element (20; 120; 220; 320), wherein said at least one fume suction path (F1) is defined between said first conveyor element (20; 120; 220; 320) and said second conveyor element (50; 250; 350);
- disconnection means (80; 180; 280; 380) suited to cause the disconnection of said first conveyor element (20; 120; 220; 320) when said second conveyor element (50; 250; 350) is disconnected from said main body (12);
**characterized in that** said disconnection means (80; 180; 280) comprise a first disconnection element (84; 184) cooperating with said first conveyor element (20; 120; 220) and protruding externally from said first conveyor element (20; 120; 220) towards said second conveyor element (50; 250) and a second disconnection element (60; 160; 260) cooperating with said second conveyor element (50; 250) and protruding internally from said second conveyor element (50; 250) towards said first conveyor element (20; 120; 220), said first disconnection element (84; 184) and said second disconnection element (60; 160; 260) being suited to interact in such a way as to move and disconnect said first conveyor element (20; 120; 220) when said second conveyor element (50; 250) is disconnected from said main body (12).

2. Torch (10; 110; 210) according to claim 1, **characterized in that** said first disconnection element (84; 184) comprises an element which is externally associated with said first conveyor element (20; 120; 220) or said first disconnection element (84; 184) comprises an element made in a single piece with said first conveyor element (20; 120; 220).

3. Torch (10; 110; 210) according to claim 1 or 2, **characterized in that** said second disconnection element (60; 160) comprises an element internally associated with said second conveyor element (50) or said second disconnection element (260) comprises an element made in a single piece with said second conveyor element (250).

4. Torch (10) according to any of the preceding claims, **characterized in that** said second conveyor element (50) interacts with said first conveyor element (20) to maintain said first conveyor element (20) in the operating position when said second conveyor element (50) is connected to said main body (12).

5. Torch (10) according to claim 4, **characterized in that** said second conveyor element (50) interacts with said first conveyor element (20) through interconnection means (60).

6. Torch (10) according to claim 5, **characterized in that** said interconnection means (60) comprise an element with circular course which is suited to be compressed so that it interacts with said first conveyor element (20) when said second conveyor element (50) is connected to said main body.

7. Torch (10) according to claim 6, **characterized in that** said interconnection means (60) comprise a shaped filiform spring (60).

8. Torch (110; 210; 310) according to any of claims from 1 to 3, **characterized in that** it comprises fixing means (150; 370) suited to maintain said first conveyor element (120; 220; 320) in the operating position.

9. Torch (110) according to claim 8, **characterized in that** said fixing means (150) comprise at least one elastically yielding portion of said first conveyor element (120), said elastically yielding portion being suited to allow said first conveyor element (120) to deform radially inwards, and a clamping element (184) cooperating with the external surface of said first conveyor element (120) in order to ensure that said first conveyor element (120) deforms radially inwards.

10. Torch (110) according to claim 9, **characterized in that** said at least one elastically yielding portion (122) is obtained by means of one or more slits (122a) made in said first conveyor element (120).

11. Torch (10; 110; 210) according to any of the preceding claims, **characterized in that** said second conveyor element (50; 250) is connected to said main body (12) by means of a screwing operation or by means of a bayonet connection system.

12. Welding device (1) comprising a supply unit, a torch (10; 110; 210; 310) and a connection cable (2) between said supply unit and said torch (10; 110; 210; 310), **characterized in that** said torch (10; 110; 210; 310) is made according to any of the preceding claims.

13. Device (1) according to claim 12, **characterized in that** it comprises a power supply unit and/or a shielding gas supply unit and/or a wire advancement and supply unit and/or a fume extraction unit and/or a cooling fluid supply unit.

## Patentansprüche

1. Schweißbrenner (10; 110; 210; 310) mit integriertem Rauchabzugssystem, wobei der Brenner (10; 110; 210; 310) einen Hauptkörper (12) und einen Anschlussbereich (18) umfasst, der geeignet ist, durch den Hauptkörper (12) mit einem Schweißdraht und einem Schweißschutzgas versorgt zu werden, wobei der Anschlussbereich (18) mit mindestens einem Absaugweg (Fl) für den während des Schweißens erzeugten Rauch versehen ist, wobei der Anschlussbereich (18) umfasst:
- eine Elektrode (24), die elektrisch mit Strom versorgt werden kann und mit einem internen Kanal (26) für den Durchgang des Schweißdrahts versehen ist;
- ein erstes Förderelement (20; 120; 220; 320), das extern mit der Elektrode (24) assoziiert und geeignet ist, um zu ermöglichen, dass das Schutzgas extern zu der Elektrode (24) befördert wird, wobei das erste Förderelement (20; 120; 220; 320) mit einer Auslassmündung (20a) versehen ist, die geeignet ist, um zu ermöglichen, dass der Schweißdraht aus der Elektrode (24) austritt;
- ein zweites Förderelement (50; 250; 350), das geeignet ist, mit dem Hauptkörper (12) assoziiert zu werden, und das extern mit dem ersten Förderelement (20; 120; 220; 320) assoziiert ist, wobei der mindestens eine Rauchabsaugweg (Fl) zwischen dem ersten Förderelement (20; 120; 220; 320) und dem zweiten Förderelement (50; 250; 350) definiert ist;
- Trennmittel (80; 180; 280; 380), die geeignet sind, die Trennung des ersten Förderelements (20; 120; 220; 320) zu bewirken, wenn das zweite Förderelement (50; 250; 350) von dem Hauptkörper (12) getrennt wird;
**dadurch gekennzeichnet, dass** die Trennmittel (80; 180; 280) ein erstes Trennelement (84; 184), das mit dem ersten Förderelement (20; 120; 220) zusammenwirkt und extern von dem ersten Förderelement (20; 120; 220) in Richtung des zweiten Förderelements (50; 250) vorsteht, und ein zweites Trennelement (60; 160; 260) umfassen, das mit dem zweiten Förderelement (50; 250) zusammenwirkt und innen von dem zweiten Förderelement (50; 250) in Richtung des ersten Förderelements (20; 120; 220) vorsteht, wobei das erste Trennelement (84; 184) und das zweite Trennelement (60; 160; 260) so interagieren können, dass sie das erste Förderelement (20; 120; 220) bewegen und trennen, wenn das zweite Förderelement (50; 250) von dem Hauptkörper (12) getrennt wird.

2. Brenner (10; 110; 210) nach Anspruch 1, **dadurch gekennzeichnet, dass** das erste Trennelement (84; 184) ein Element umfasst, das extern mit dem ersten Förderelement (20; 120; 220) assoziiert ist, oder das erste Trennelement (84; 184) ein Element umfasst, das in einem Stück mit dem ersten Förderelement (20; 120; 220) hergestellt ist.

3. Brenner (10; 110; 210) nach Anspruch 1 oder 2, **dadurch gekennzeichnet, dass** das zweite Trennelement (60; 160) ein Element umfasst, das intern mit dem zweiten Förderelement (50) assoziiert ist, oder das zweite Trennelement (260) ein Element umfasst, das in einem Stück mit dem zweiten Förderelement (250) hergestellt ist.

4. Brenner (10) nach einem der vorhergehenden Ansprüche, **dadurch gekennzeichnet, dass** das zweite Förderelement (50) mit dem ersten Förderelement (20) interagiert, um das erste Förderelement (20) in der Betriebsposition zu halten, wenn das zweite Förderelement (50) mit dem Hauptkörper (12) verbunden ist.

5. Brenner (10) nach Anspruch 4, **dadurch gekennzeichnet, dass** das zweite Förderelement (50) mit dem ersten Förderelement (20) über Verbindungsmittel (60) interagiert.

6. Brenner (10) nach Anspruch 5, **dadurch gekennzeichnet, dass** die Verbindungsmittel (60) ein Element mit kreisförmigem Verlauf umfassen, das geeignet ist, zusammengedrückt zu werden, so dass es mit dem ersten Förderelement (20) interagiert, wenn das zweite Förderelement (50) mit dem Hauptkörper verbunden wird.

7. Brenner (10) nach Anspruch 6, **dadurch gekennzeichnet, dass** die Verbindungsmittel (60) eine geformte fadenförmige Feder (60) umfassen.

8. Brenner (110; 210; 310) nach einem der Ansprüche 1 bis 3, **dadurch gekennzeichnet, dass** er Befestigungsmittel (150; 370) umfasst, die geeignet sind, das erste Förderelement (120; 220; 320) in der Betriebsposition zu halten.

9. Brenner (110) nach Anspruch 8, **dadurch gekennzeichnet, dass** die Befestigungsmittel (150) mindestens einen elastisch nachgiebigen Abschnitt des ersten Förderelements (120), wobei der elastisch nachgiebige Abschnitt geeignet ist, es dem ersten Förderelement (120) zu ermöglichen, sich radial nach innen zu verformen, und ein Klemmelement (184) umfassen, das mit der Außenfläche des ersten Förderelements (120) zusammenwirkt, um sicherzustellen, dass sich das erste Förderelement (120) radial nach innen verformt wird.

10. Brenner (110) nach Anspruch 9, **dadurch gekennzeichnet, dass** der mindestens eine elastisch nachgiebige Abschnitt (122) mittels eines oder mehrerer Schlitze (122a) erhalten wird, die in dem ersten Förderelement (120) ausgebildet sind.

11. Brenner (10; 110; 210) nach einem der vorhergehenden Ansprüche, **dadurch gekennzeichnet, dass** das zweite Förderelement (50; 250) mittels eines Schraubvorgangs oder mittels eines Bajonettverbindungssystems mit dem Hauptkörper (12) verbunden ist.

12. Schweißvorrichtung (1) mit einer Versorgungseinheit, einem Brenner (10; 110; 210; 310) und einem Verbindungskabel (2) zwischen der Versorgungseinheit und dem Brenner (10; 110; 210; 310), **dadurch gekennzeichnet, dass** der Brenner (10; 110; 210; 310) nach einem der vorhergehenden Ansprüche hergestellt ist.

13. Vorrichtung (1) nach Anspruch 12, **dadurch gekennzeichnet, dass** sie eine Stromversorgungseinheit und/oder eine Schutzgasversorgungseinheit und/oder eine Drahtvorschub- und -versorgungseinheit und/oder eine Rauchabzugseinheit und/oder eine Kühlflüssigkeitsversorgungseinheit umfasst.

## Revendications

1. Torche de soudage (10 ; 110 ; 210 ; 310) avec système intégré d'extraction des fumées, ladite torche (10 ; 110 ; 210 ; 310) comprenant un corps principal (12) et une zone terminale (18) apte à être alimentée, à travers ledit corps principal (12), avec un fil de soudage et un gaz de protection de soudage, ladite zone terminale (18) étant pourvue d'au moins un trajet d'aspiration (F1) pour les fumées générées pendant le soudage, ladite zone terminale (18) comprenant :
- une électrode (24) apte à être alimentée électriquement et pourvue d'un canal interne (26) pour le passage dudit fil de soudage ;
- un premier élément transporteur (20 ; 120 ; 220 ; 320) associé extérieurement à ladite électrode (24) et apte à permettre audit gaz de protection d'être acheminé extérieurement à ladite électrode (24), ledit premier élément transporteur (20 ; 120 ; 220 ; 320) étant pourvu d'une embouchure de sortie (20a) apte à permettre audit fil de soudage de sortir de ladite électrode (24) ;
- un second élément transporteur (50 ; 250 ; 350) apte à être associé audit corps principal (12) et associé extérieurement audit premier élément transporteur (20 ; 120 ; 220 ; 320), ledit au moins un trajet d'aspiration (F1) des fumées étant défini entre ledit premier élément transporteur (20 ; 120 ; 220 ; 320) et ledit second élément transporteur (50 ; 250 ; 350) ;
- des moyens de séparation (80 ; 180 ; 280 ; 380) aptes à provoquer la séparation dudit premier élément transporteur (20 ; 120 ; 220 ; 320) lorsque ledit second élément transporteur (50 ; 250 ; 350) est séparé dudit corps principal (12) ;
**caractérisés en ce que** lesdits moyens de séparation (80 ; 180 ; 280) comprennent un premier élément de séparation (84 ; 184) coopérant avec ledit premier élément transporteur (20 ; 120 ; 220) et faisant saillie extérieurement à partir dudit premier élément transporteur (20 ; 120 ; 220) vers ledit second élément transporteur (50 ; 250) et un second élément de séparation (60 ; 160 ; 260) coopérant avec ledit second élément transporteur (50 ; 250) et faisant saillie intérieurement à partir dudit second élément transporteur (50 ; 250) vers ledit premier élément transporteur (20 ; 120 ; 220), ledit premier élément de séparation (84 ; 184) et ledit second élément de séparation (60 ; 160 ; 260) étant aptes à interagir de manière à déplacer et séparer ledit premier élément transporteur (20 ; 120 ; 220) lorsque ledit second élément transporteur (50 ; 250) est séparé dudit corps principal (12).

2. Torche (10 ; 110 ; 210) selon la revendication 1, **caractérisée en ce que** ledit premier élément de séparation (84 ; 184) comprend un élément qui est associé extérieurement audit premier élément transporteur (20 ; 120 ; 220) ou ledit premier élément de séparation (84 ; 184) comprend un élément réalisé en une seule pièce avec ledit premier élément transporteur (20 ; 120 ; 220).

3. Torche (10 ; 110 ; 210) selon la revendication 1 ou 2, **caractérisée en ce que** ledit second élément de séparation (60 ; 160) comprend un élément associé intérieurement audit second élément transporteur (50) ou ledit second élément de séparation (260) comprend un élément réalisé en une seule pièce avec ledit second élément transporteur (250).

4. Torche (10) selon l'une quelconque des revendications précédentes, **caractérisée en ce que** ledit second élément transporteur (50) interagit avec ledit premier élément transporteur (20) pour maintenir ledit premier élément transporteur (20) en position de fonctionnement lorsque ledit second élément transporteur (50) est relié audit corps principal (12).

5. Torche (10) selon la revendication 4, **caractérisée en ce que** ledit second élément transporteur (50) interagit avec ledit premier élément transporteur (20) par l'intermédiaire de moyens de raccordement réciproque (60).

6. Torche (10) selon la revendication 5, **caractérisée en ce que** lesdits moyens de raccordement réciproque (60) comprennent un élément à parcours circulaire qui est apte à être comprimé de manière à interagir avec ledit premier élément transporteur (20) lorsque ledit second élément transporteur (50) est relié audit corps principal.

7. Torche (10) selon la revendication 6, **caractérisée en ce que** lesdits moyens de raccordement réciproque (60) comprennent un ressort filiforme façonné (60).

8. Torche (110 ; 210 ; 310) selon l'une quelconque des revendications de 1 à 3, **caractérisée en ce qu'**elle comprend des moyens de fixation (150 ; 370) aptes à maintenir ledit premier élément transporteur (120 ; 220 ; 320) en position de fonctionnement.

9. Torche (110) selon la revendication 8, **caractérisée en ce que** lesdits moyens de fixation (150) comprennent au moins une partie élastiquement déformable dudit premier élément transporteur (120), ladite partie élastiquement déformable étant apte à permettre audit premier élément transporteur (120) de se déformer radialement vers l'intérieur, et un élément de serrage (184) coopérant avec la surface externe dudit premier élément transporteur (120) afin d'assurer que ledit premier élément transporteur (120) se déforme radialement vers l'intérieur.

10. Torche (110) selon la revendication 9, **caractérisée en ce que** ladite au moins une partie élastiquement déformable (122) est obtenue au moyen d'une ou plusieurs fentes (122a) réalisées dans ledit premier élément transporteur (120).

11. Torche (10 ; 110 ; 210) selon l'une quelconque des revendications précédentes, **caractérisée en ce que** ledit second élément transporteur (50 ; 250) est relié audit corps principal (12) au moyen d'une opération de vissage ou au moyen d'un système de raccordement à baïonnette.

12. Dispositif de soudage (1) comprenant une unité d'alimentation, une torche (10 ; 110 ; 210 ; 310) et un câble de raccordement (2) entre ladite unité d'alimentation et ladite torche (10 ; 110 ; 210 ; 310), **caractérisé en ce que** ladite torche (10 ; 110 ; 210 ; 310) est réalisée selon l'une quelconque des revendications précédentes.

13. Dispositif (1) selon la revendication 12, **caractérisé en ce qu'**il comprend une unité d'alimentation électrique et/ou une unité d'alimentation en gaz de protection et/ou une unité d'avancement et d'alimentation en fil et/ou une unité d'extraction des fumées et/ou une unité d'alimentation en fluide de refroidissement.
